# EUROPÄISCHE PATENTANMELDUNG

(11) **EP 2 378 564 A2**
(43) Veröffentlichungstag der Anmeldung: **19.10.2011**
(21) Anmeldenummer: 11162349.2
(22) Anmeldetag: 14.04.2011
(51) Int. Cl.: H01L 31/042

(54) **Montagesystem für Solarmodule**

(30) Priorität: 19.04.2010 DE 202010005249 U
(71) Anmelder: SCHÜCO International KG, 33609 Bielefeld (DE)
(72) Erfinder: Ritzler, Ralf, 33607 Bielefeld (DE); Salzer, Wadim, 33729 Bielefeld (DE); Rosenwirt, Andreas, 32130 Enger (DE); Imkamp, Gerd, 33334 Gütersloh (DE); Stockhausen, Andre, 32052 Herford (DE); Hanke, Carsten, 33729 Bielefeld (DE)
(74) Vertreter: Dantz, Jan Henning

(57) **Zusammenfassung**

Montagesystem (1) für Solarmodule (6), mit einer Unterkonstruktion (7, 9, 11), an der ein Gestell (2) abgestützt ist, auf dem ein oder mehrere plattenförmige Solarmodule (6) gehalten sind, und einem Anker (13, 35), der an einem Bauwerk festlegbar ist und das Gestell (2) in einem oberen Bereich abstützt, wobei an dem Anker (13, 35) ein Halteteil (20, 50") zur Fixierung des Gestells (2) festgelegt ist, das für eine Neigungsverstellung relativ zum Anker (13, 35) um mindestens eine Achse verstellbar ist.

## Beschreibung

Die vorliegende Erfindung betrifft ein Montagesystem für Solarmodule, mit einem Bodenteil, an dem ein Gestell abgestützt ist, auf dem ein oder mehrere plattenförmige Solarmodule gehalten sind, und einem Anker, der an einer Wand eines Gebäudes festlegbar ist und das Gestell in einem oberen Bereich abstützt.

Es sind Montagesysteme für Solarmodule bekannt, bei denen ein Gestell auf einer Unterkonstruktion, z. B. Rammpfosten, abgestützt ist. Das Gestell wird dabei in einem vorbestimmten Neigungswinkel entweder auf mehreren die Unterkonstruktion bildenden Pfosten montiert, wobei vordere kurze Pfosten zur Südseite und hintere längere Pfosten zur Nordseite angeordnet sind, oder auf nur einem Pfosten, wobei das Gestell in etwa im Mittelpunkt getragen wird, so dass eine gleichmäßige Lastabtragung gegeben ist. Diese Montagesysteme können auf oder an Gebäuden angeordnet sein oder auf Freilandflächen. Nachteilig ist, dass neben dem Gestell relativ aufwendige und teuere Unterkonstruktionen bereitgestellt werden müssen.

Des Weiteren sind fassadenintegrierte Montagesysteme für Solarmodule bekannt, die einen Teil der Gebäudehülle bilden. Hierbei haben die Systeme neben den reinen Haltefunktionen auch noch weitere Aufgaben zu erfüllen, wie z. B. Wärmeisolation und/oder das Bereitstellen einer dichten Fassade bzw. eines dichten Fassadenabschnittes. Nachteilig ist hierbei, dass eine Nachrüstung an der Gebäudehülle nicht möglich ist bzw. nur mit erheblichem Aufwand betrieben werden kann.

Der vorliegenden Erfindung liegt daher die Aufgabe zugrunde, ein Montagesystem für Solarmodule zu schaffen, das flexibel an die örtlichen Gegebenheiten angepasst werden kann und auf einfache Weise eine optimierte Ausrichtung der Solarmodule ermöglicht. Zudem soll auch eine Nachrüstung an Gebäuden möglich sein.

Diese Aufgabe wird mit einem Montagesystem mit den Merkmalen des Anspruches 1 gelöst.

Erfindungsgemäß ist an dem Anker ein Halteteil zur Fixierung des Gestells festgelegt, das für eine Neigungsverstellung relativ zum Anker um mindestens eine Achse verstellbar ist. Dadurch kann die Ausrichtung der Solarmodule an die örtlichen Gegebenheiten angepasst werden. Zudem kann die Neigungsverstellung auch genutzt werden, um jahreszeitenabhängig die Neigung der Solarmodule zu optimieren, beispielsweise kann im Winter eine steilere Aufstellung der Solarmodule als im Sommer eingesetzt werden, um den Wirkungsgrad zu erhöhen. Die Verstellung muss dabei nicht exakt um eine "Achse" erfolgen, sondern kann auch durch eine Schwenkbewegung oder überlagerte Schiebe- und Drehbewegung erreicht werden.

Gemäß einer bevorzugten Ausgestaltung ist das Halteteil relativ zum Anker um eine horizontale Achse verstellbar. Dadurch kann die Neigung der Solarmodule zur Horizontalen ausgerichtet werden, was einerseits eine jahreszeitabhängige Ausrichtung ermöglicht und andererseits auch eine Aufstellung bei Unebenheiten ermöglicht. Je nach Jahreszeit liegt der bevorzugte Neigungswinkel zur Horizontalen in einem Bereich zwischen 50° und 80°, abhängig vom Standort des Montagesystems.

Alternativ oder zusätzlich kann das Halteteil relativ zum Anker um eine im Wesentlichen vertikale Achse verstellbar sein. Dies ermöglicht eine Ausrichtung der Solarmodule relativ zu einem Gebäude oder Bauwerk. Dadurch kann, falls die Wand des Gebäudes nicht in Süd- oder Nordrichtung ausgelegt ist, eine flexible Anpassung durch Verstellen um eine im Wesentlichen vertikale Achse erfolgen. Die vertikale Achse kann dabei entsprechend dem Neigungswinkel der sich aufrichtenden Profile ausgebildet sein, so dass die "vertikale Achse" durch die Längsachse der Profile des Gestells gebildet wird und insofern von der Vertikalen leicht abweichen kann.

Vorzugsweise ist das Halteteil relativ zum Anker um mehrere Achsen verstellbar. Dadurch kann eine besonders flexible Anpassung an die örtlichen Gegebenheiten erfolgen, ohne dass das Monatesystem verändert werden muss.

Die plattenförmigen Solarmodule spannen dabei eine Ebene auf, die vorzugsweise zur Ebene einer Wand eines Gebäudes sowohl in horizontale Richtung als auch in vertikale Richtung geneigt angeordnet ist. In vielen Fällen erstreckt sich eine Wand eines Gebäudes zur Fixierung von Solarmodulen nicht in Richtung Ost-West-Richtung, so dass für einen optimalen Wirkungsgrad der Solarmodule eine Ausrichtung relativ zur Wand des Gebäudes notwendig ist. Dies kann über entsprechende Neigungsverstellung um die beiden Achsen erfolgen.

Vorzugsweise ist das Bodenteil um eine horizontale Achse an einem Sockelteil drehbar gelagert, beispielsweise über ein Scharniergelenk. Ferner kann die Länge des Ankers zur Verstellung des Abstandes zwischen dem Halteteil und der Wand veränderbar sein, so dass auf einfache Weise eine Neigungsverstellung um eine horizontale Achse vorgenommen werden kann. Dadurch kann das Montagesystem auch leicht an bestehenden Bauwerken, wie Industriehallen, nachgerüstet werden.

Gemäß einer weiteren Ausgestaltung ist an dem Halteteil ein sich nach oben erstreckendes Profil gehalten, das in Längsrichtung relativ zu dem Halteteil verschiebbar ist. Dadurch kann für die Montage das Halteteil einfach auf das Profil aufgeschoben werden. Zudem können Wärmespannungen verhindert werden, die auftreten können, wenn das Gestell mit langen Profilen montiert wird, beispielsweise um ein Gestell mit mehr als 5 m Höhe zu montieren. Für eine verschiebbare Lagerung kann das Halteteil dabei einen Abschnitt des Profils teilweise umgreifen oder über andere Führungsmittel eine Schiebebewegung des Profils ermöglichen.

Die Erfindung wird nachfolgend anhand mehrerer Ausführungsbeispiele mit Bezug auf die beigefügten Zeichnungen näher erläutert. Es zeigen:
- Figur 1: eine perspektivische Ansicht eines Ausführungsbeispieles eines erfindungsgemäßen Montagessystems;
- Figur 2: eine Seitenansicht des Montagesystems der Figur 1;
- Figuren 3A und 3B: zwei Ansichten des Bodenteils des Montagesystems der Figur 1;
- Figur 4: eine perspektivische Ansicht eines Halteteils des Montage-systems der Figur 1;
- Figuren 5A bis 5C: mehrere Ansichten einer modifizierten Ausgestaltung eines Halteteils für ein Montagesystem der Figur 1;
- Figur 6A bis 6C: mehrere Ansichten des Montagesystems der Figur 1 bei der Montage;
- Figur 7: eine Draufsicht auf ein Gebäude mit mehreren Solarmodulen;
- Figur 8: eine Detailansicht eines längenverstellbaren Ankers für ein erfindungsgemäßes Montagesystem, und
- Figur 9: eine Ansicht eines modifizierten Ankers mit Längenverstellung.

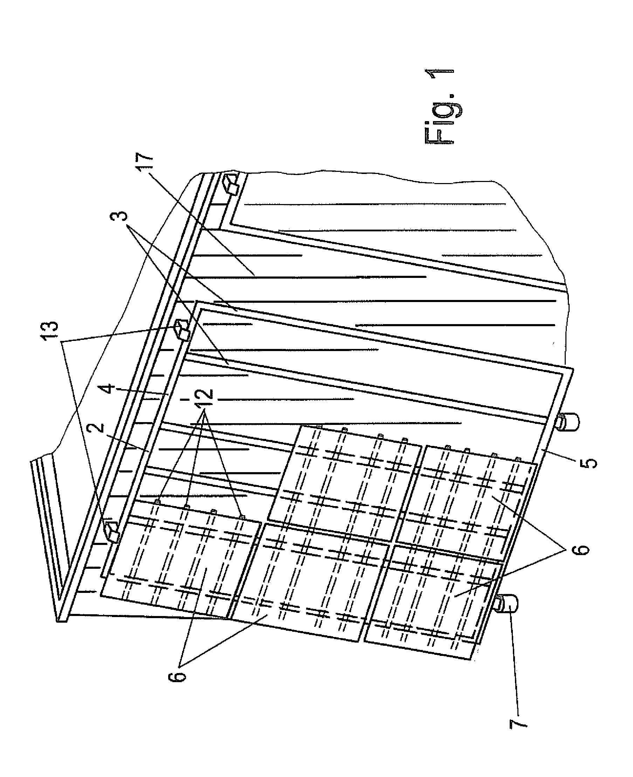

Ein Montagesystem 1 für Solarmodule umfasst ein Gestell 2, das aus nach oben gerichteten Profilen 3 und horizontalen Profilen 4 und 5 besteht, wobei in Figur 1 lediglich ein oberes horizontales Profil 4 und ein unteres horizontales Profil 5 gezeigt sind. Im mittleren Bereich können noch weiteren horizontale Profile angeordnet sein. An dem Gestell 2 sind ein oder mehrere Solarmodule 6 festgelegt, die über leistenförmige Befestigungsmittel 12 an dem Gestell 2 gehalten sind.

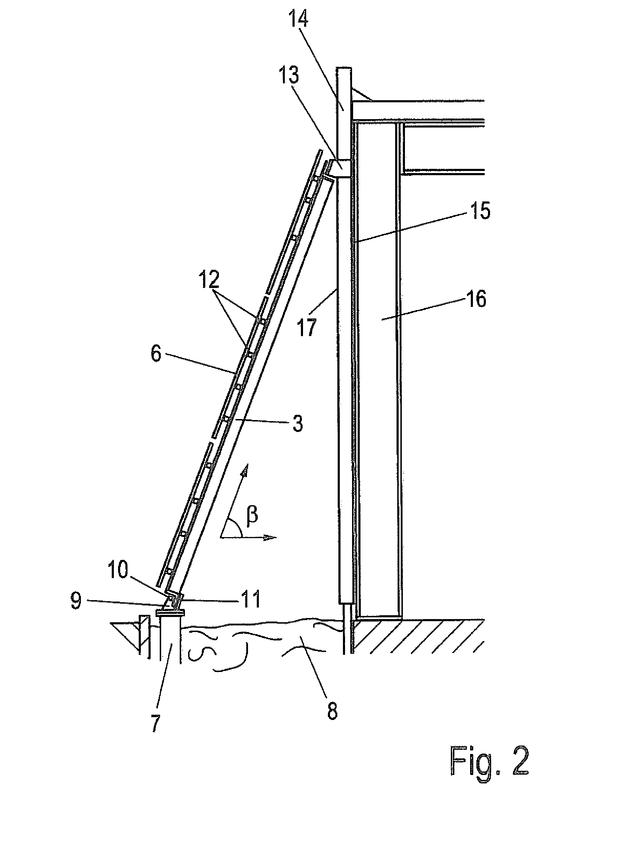

Das Gestell 2 ist bodenseitig durch eine Unterkonstruktion abgestützt, welche die Gewichtslasten des Gestells 2 mit den Solarmodulen 6 nahezu vollständig abträgt. Die Unterkonstruktion umfasst ein Bodenteil 11 und ein feststehendes Teil 9, das an einem Rammpfosten 7 festgelegt ist, der im Erdreich 8 verankert ist (Figur 2).

Im oberen Bereich ist das Gestell 2 an beabstandeten Stellen über Anker 13 an einer Wand 17 oder Fassade eines Gebäudes festgelegt. Das Gestell 2 kann sich auch über größere Höhen, beispielsweise über 4 m, erstrecken und an Wänden von Industriehallen montiert werden. Um einen optimalen Neigungswinkel β entsprechend der örtlichen Gegebenheiten zu erhalten, ist das Bodenteil beabstandet von der Wand 17 des Gebäudes angeordnet, wobei der Neigungswinkel beispielsweise in einem Bereich zwischen 60° und 80° liegen kann. Die Wand 17 des Gebäudes umfasst eine Isolierung 14, die benachbart zu einer Innenwand 15 angeordnet ist. Im Innenbereich ist ein Pfosten 16 angeordnet, der für die Statik notwendig ist und an dem ein Anker 13 festgelegt werden kann. Es ist möglich, im Innenbereich ein Gegenlager für die Anker 13 vorzusehen.

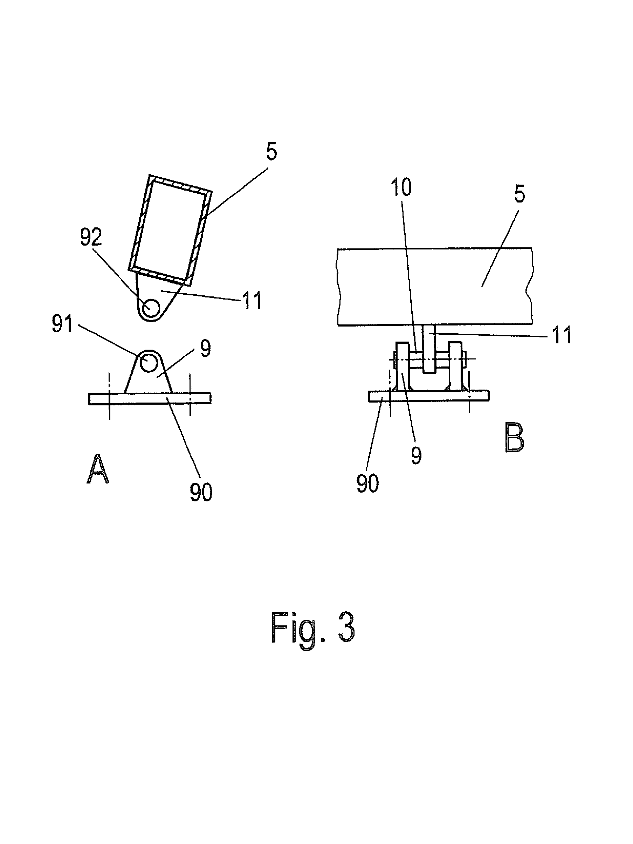

In den Figuren 3A und 3B ist ein Bodenteil 11 gezeigt, das als Lasche ausgebildet ist, die an einer bodenseitigen Querstrebe 5 verschweißt ist. Das Bodenteil 11 umfasst eine Öffnung 92, durch die eine Achse 10 durchgesteckt werden kann. Zur schwenkbaren Lagerung des Bodenteils 11 ist ein feststehendes Teil 9 vorgesehen, das aus zwei Laschen gebildet ist, die ebenfalls eine Öffnung 91 zum Durchstecken der Achse 10 aufweisen. Die beiden Laschen sind über eine Montageplatte 90 miteinander verbunden und dort verschweißt. Die Montageplatte 90 kann auf einem Sockel, beispielsweise aus Beton, oder einem Pfosten fixiert werden

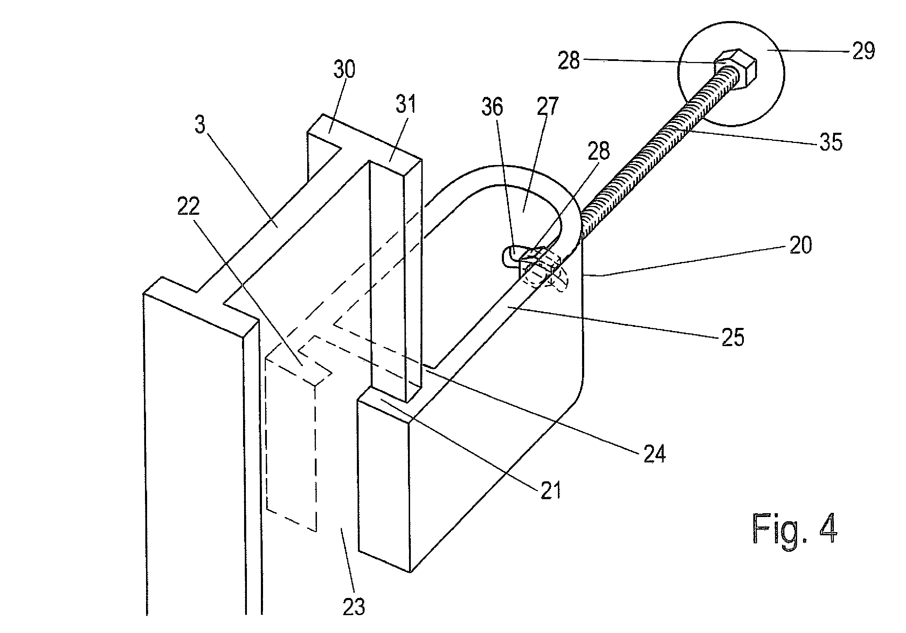

In Figur 4 ist die Halterung für einen sich nach oben im Neigungswinkel β erstreckenden Pfosten 3 dargestellt, der als Doppel-T-Profil ausgebildet ist und entsprechend an gegenüberliegenden Seiten jeweils zwei seitlich hervorstehende Stege 30 und 31 umfasst, die über einen Mittelsteg 32 miteinander verbunden sind. Das Profil 3 ist über einen Halter 20 verschiebbar gelagert, der U-förmig ausgebildet ist und zwei Schenkel 25 und 26 aufweist, die an einem Boden 27 miteinander verbunden sind. Am Boden 27 ist ein als Gewindestab ausgebildeter Anker 35 vorgesehen, der an einem Pfosten 16 des Gebäudes oder an einem anderen Bauteil des Gebäudes fixiert ist. An einer Wanddurchführung ist eine Dichtung 29 über eine Mutter 28 an dem Anker 35 fixiert. Der Halter 20 ist ebenfalls über Muttern 28 in der gewünschten Position fixiert. Um das Profil 3 verschiebbar zu lagern, sind an den Schenkeln 25 und 26 nach innen gerichtete Stege 21 und 22 sowie ein Verbindungssteg 24 ausgebildet, die die Stege 30 und 31 an dem Profil 3 umgreifen. Der Mittelsteg 32 ist durch einen Schlitz 23 zwischen den Stegen 21 und 22 durchgeführt. Dadurch kann das Profil 3 in Längsrichtung verschoben werden, ist im Übrigen aber an dem Halter 20 festgelegt.

In dem gezeigten Ausführungsbeispiel in Fig. 4 ist der Boden 27 gerundet ausgebildet und entsprechend ist das Langloch 36 ebenfalls bogenförmig. Dadurch kann das Halteteil 20 relativ zu dem Anker 35 verschwenkt werden, um das Profil 3 und damit das Gestell 2 mit den Solarmodulen 6 auszurichten. Die Schwenkachse verläuft dabei senkrecht zur Längsachse des stangenförmigen Ankers 35. Über entsprechende geneigte Unterlegscheiben unter den Muttern 28 kann zusätzlich auch eine gewisse Verstellmöglichkeit um eine Achse senkrecht zu dem Langloch 36 erfolgen.

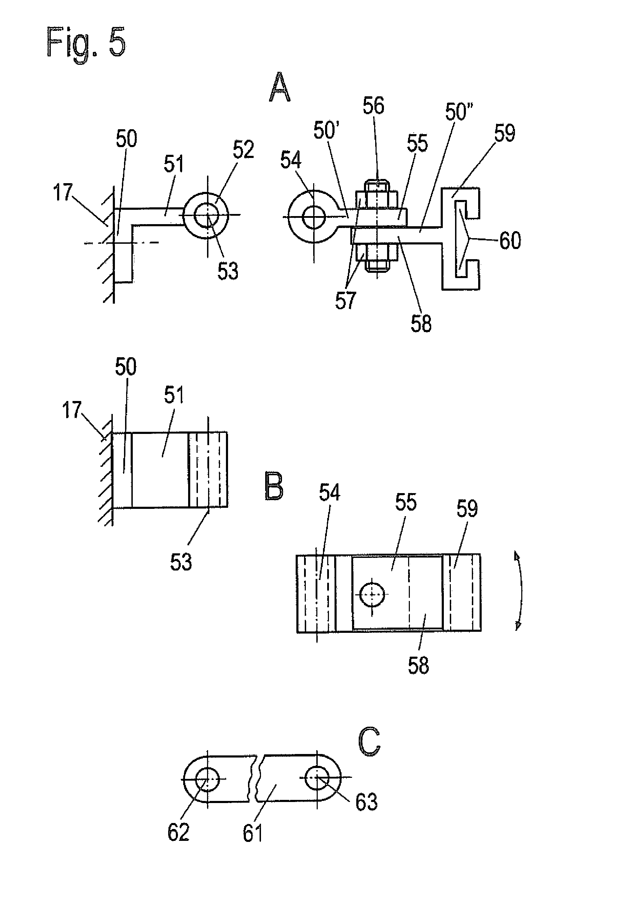

In den Figuren 5A bis 5C ist eine weitere Ausgestaltung eines mehrteiligen Halteelementes gezeigt, um ein Gestell 2 an einer Wand 17 eines Gebäudes festzulegen. Ein erstes Ankerteil 50 ist an einer schematisch dargestellten Wand 17 festgelegt und umfasst einen hervorstehenden Abschnitt 51, an dem eine Hülse 52 zur Ausbildung einer Drehachse 53 angeordnet ist. An der Hülse 52 ist über eine nicht dargestellte Achse eine zweite Hülse 54 eines zweiten Ankerteils 50' festgelegt, das auf der gegenüberliegenden Seite eine Hülse 55 aufweist, die von einer Achse 56 durchgriffen ist. An der Achse 56 ist eine Hülse 58 eines dritten Ankerteils 50" fixiert, die ebenfalls von der Achse 56 durchgriffen ist, wobei das zweite Ankerteil 50' und das dritte Ankerteil 50" über Muttern 57 an der Achse 56 aneinander gesichert sind. An dem dritten Ankerteil 50" ist ein Führungselement 59 mit Nuten 60 zum Einfügen eines Abschnittes eines Profils 3 angeordnet. Das dritte Ankerteil 50" bildet insofern ein Halteteil für die verschiebbare Lagerung des Profils 3 aus.

Die Fixierung der Hülsen 52 und 54 kann wie bei den Hülsen 55 und 58 erfolgen, so dass das dritte Ankerteil 50" sowohl um eine horizontale Achse als auch um eine vertikale Achse verschwenkbar an dem ersten Ankerteil 50 gelagert ist.

Zudem kann zwischen der Hülse 52 und der Hülse 54 ein Verlängerungselement 61 eingesetzt werden, das an gegenüberliegenden Enden Öffnungen 62 und 63 aufweist, in die entsprechende Achsen eingesteckt werden können.

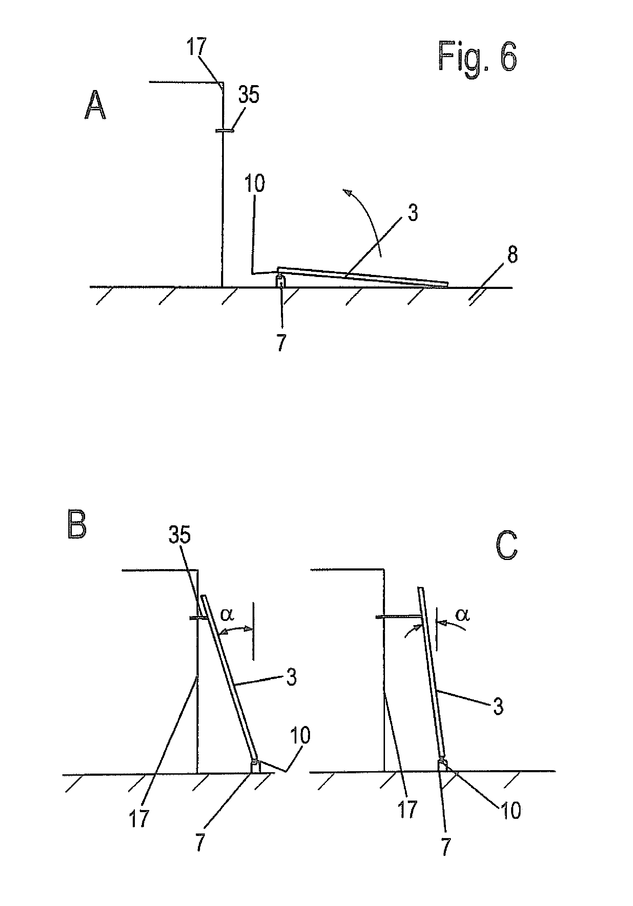

In den Figuren 6A bis 6C ist die Montage eines erfindungsgemäßen Montagesystems schematisch dargestellt. In Figur 6A ist bodenseitig ein Rammpfosten 7 im Erdreich 8 montiert, an dem ein feststehendes Teil 9 des Bodenteils fixiert ist. An einem um eine Achse 10 verschwenkbar gelagerten Halteteil 11 ist ein Profil 3 festgelegt, das am Boden liegt und am Boden mit anderen Profilen 3 durch horizontale Profile 4 und 5 zu einem Gestell 2 verbindbar ist. Das Gestell 2 kann dann beabstandet von dem Boden in einer Zwischenposition positioniert werden, um die Solarmodule 6 an dem Gestell 2 zu montieren. Ferner werden an einer Wand 17 des Gebäudes die notwendigen Anker 35 festgelegt.

Anschließend werden die Pfosten 3, wahlweise einzeln oder zusammen mit dem Gestell 2, nach oben verschwenkt. Danach wird ein Halteteil 20, 20' oder das dritte Ankerteil 59' auf das Profil 3 geschoben und an dem Anker 35 festgelegt. Dabei ist der Pfosten 3 und somit auch die Solarmodule 6 in einem Winkel α zur Vertikalen geneigt angeordnet. Der Neigungswinkel α kann abhängig von der Jahreszeit etwas größer oder kleiner gewählt werden, vorzugsweise zwischen 10 und 30°.

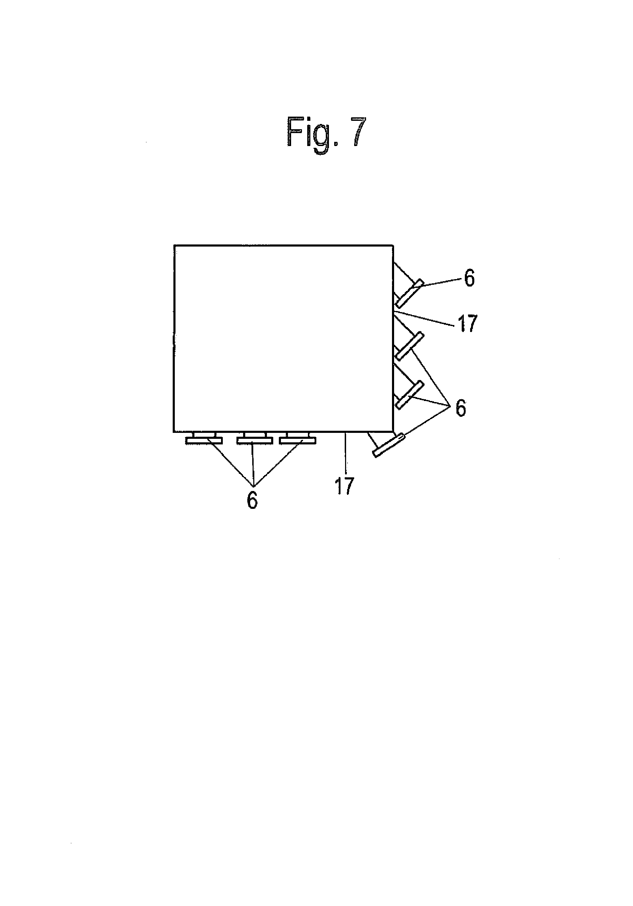

In Figur 7 ist ein Gebäude mit mehreren montierten Solarmodulen 6 auf den erfindungsgemäßen Montagesystemen schematisch gezeigt. Da das Gestell 2 am Bodenteil verschwenkbar gelagert ist, kann der Neigungswinkel α eingestellt werden. Zudem ist es auch möglich, die Solarmodule 6 winklig zur Ebene einer Wand 17 des Gebäudes auszurichten, wie dies auf dem rechten Teil der Darstellung gezeigt ist. Hierfür wird beispielsweise ein mehrteiliger Anker 50, 50' und 50" eingesetzt, der eine entsprechende optimierte Ausrichtung zur Befestigung der Solarmodule 6 ermöglicht.

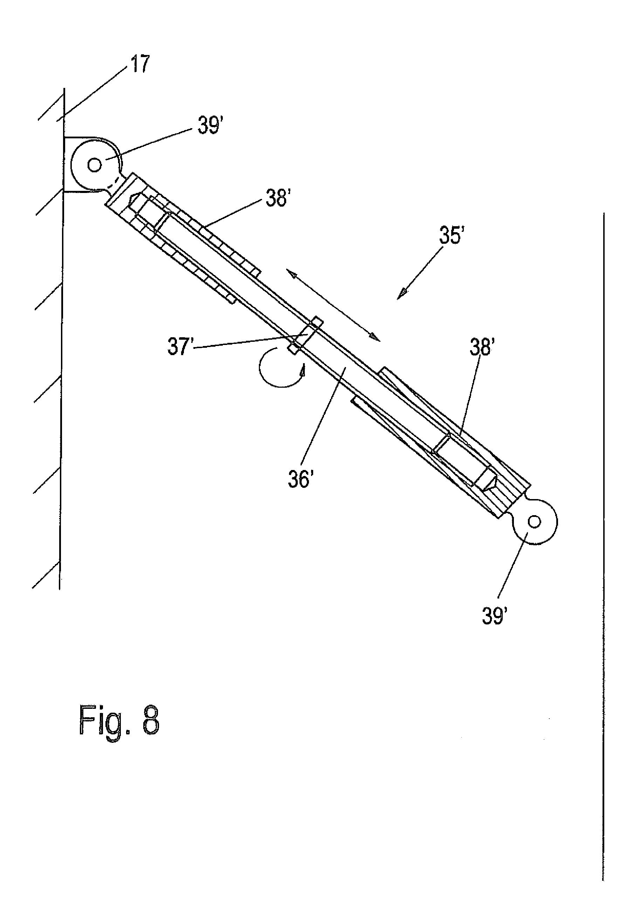

In Figur 8 ist schematisch ein längenverstellbarer Anker 35' gezeigt, bei dem ein stangenförmiges Gewindeteil 36' mittig mit einem Werkzeugansatz 37' versehen ist und auf gegenüberliegenden Seiten in eine Hülse 38' eingedreht ist. An der Hülse 38' ist ein Anbindungspunkt 39' vorgesehen, damit der Anker 35' an einer Wand 17 eines Gebäudes bzw. mit einem Halter 20, 20' oder 40 verbunden werden kann. Durch die Längenänderung des Ankers 35' kann der Neigungswinkel der Solarmodule verstellt werden.

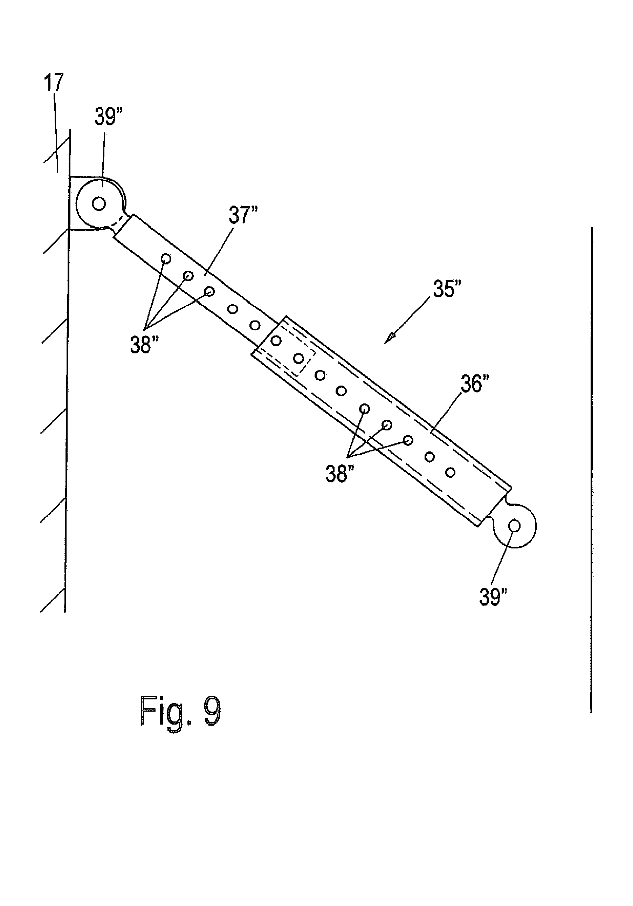

In Figur 9 ist eine modifizierte Ausgestaltung eins Ankers 35" gezeigt, der ebenfalls in der Länge verstellbar ist. Hierfür greift ein Stab 37" in eine Hülse 36" ein, wobei sowohl in dem Stab 37" als auch in der Hülse 36" Öffnungen 38" ausgebildet sind, die dann durch entsprechende Stifte zur Fixierung durchgriffen werden können. An dem Stab 37" ist ein Anknüpfungspunkt 39" zur Verbindung an einer Wand 17 ausgebildet und gleichermaßen ist ein Anknüpfungspunkt 39" zur Verbindung an einem Halteteil 20 an der Hülse 36" ausgebildet.

In den dargestellten Ausführungsbeispielen werden die Halteteile 20, 20', 59 jeweils an einem Profil 3 montiert, das verschiebbar gelagert ist. Es ist natürlich auch möglich, an dem Gestell 2 zusätzliche Bauteile zu montieren, die eine verschiebbare Lagerung relativ zu einem feststehenden Anker ermöglichen

## Patentansprüche

1. Montagesystem (1) für Solarmodule (6), mit einer Unterkonstruktion (7, 9, 11), an der ein Gestell (2) abgestützt ist, auf dem ein oder mehrere plattenförmige Solarmodule (6) gehalten sind, und einem Anker (13, 35), der an einem Bauwerk festlegbar ist und das Gestell (2) in einem oberen Bereich abstützt, **dadurch gekennzeichnet, dass** an dem Anker (13, 35) ein Halteteil (20, 50") zur Fixierung des Gestells (2) festgelegt ist, das für eine Neigungsverstellung relativ zum Anker (13, 35) um mindestens eine Achse verstellbar ist.

2. Montagesystem nach Anspruch 1, **dadurch gekennzeichnet, dass** das Halteteil (20, 50") relativ zum Anker (13, 35) um eine horizontale Achse verstellbar ist.

3. Montagesystem nach Anspruch 1 oder 2, **dadurch gekennzeichnet, dass** das Halteteil (20, 50") relativ zum Anker (13, 35) um eine im Wesentlichen vertikale Achse verstellbar ist.

4. Montagesystem nach einem der Ansprüche 1 bis 3, **dadurch gekennzeichnet, dass** das Halteteil (20, 50") relativ zum Anker (13, 35) um mehrere Achsen verstellbar ist.

5. Montagesystem nach einem der Ansprüche 1 bis 4, **dadurch gekennzeichnet, dass** die Länge des Ankers (13, 35) zur Verstellung des Abstandes zwischen dem Halteteil (20, 50") und der Wand (17) veränderbar ist.

6. Montagesystem nach einem der Ansprüche 1 bis 5, **dadurch gekennzeichnet, dass** die plattenförmigen Solarmodule (6) eine Ebene aufspannen, die zur Wand (17) des Gebäudes sowohl in horizontale Richtung als auch in vertikale Richtung geneigt angeordnet ist.

7. Montagesystem nach einem der Ansprüche 1 bis 6, **dadurch gekennzeichnet, dass** das Bodenteil (11) um eine horizontale Achse an einem Sockelteil (9) drehbar gelagert ist.

8. Montagesystem nach einem der Ansprüche 1 bis 7, **dadurch gekennzeichnet, dass** an dem Halteteil (20, 50") ein sich nach oben erstreckendes Profil (3) gehalten ist, das in Längsrichtung relativ zu dem Halteteil (20, 50") verschiebbar ist.

9. Montagesystem nach Anspruch 8, **dadurch gekennzeichnet, dass** das Halteteil (20, 50") einen Abschnitt des Profils (3) teilweise umgreift.
